# EUROPEAN PATENT SPECIFICATION

(11) **EP 1 957 814 B1**
(45) Date of publication and mention of the grant of the patent: **02.10.2013**
(21) Application number: 05810002.5
(22) Date of filing: 25.11.2005
(51) Int. Cl.: F16H 63/38, F16H 61/28, F16D 11/00, F16D 11/10

(54) **A DEVICE FOR PREVENTING GEAR HOPOUT IN A TOOTH CLUTCH IN A VEHICLE TRANSMISSION**
VORRICHTUNG ZUM VERHINDERN EINES AUSSPRINGENS VON ZAHNRÄDERN IN EINER ZAHNKUPPLUNG IN EINEM FAHRZEUGGETRIEBE
DISPOSITIF PERMETTANT DE PREVENIR LES CHANGEMENTS INTEMPESTIFS DE VITESSE D'UN EMBRAYAGE A DENTS D'UNE BOITE DE VITESSES DE VEHICULE

(43) Date of publication of application: 20.08.2008
(73) Proprietor: Volvo Lastvagnar AB, 405 08 Göteborg (SE)
(72) Inventor: ALFREDSSON, Sverker, S-426 53 Västra Frölunda (SE); STERVIK, Hans, S-442 71 Kärna (SE)
(74) Representative: Fröhling, Werner Otto
(86) International application number: PCT/SE2005/001781
(87) International publication number: WO 2007/061348

(56) References cited:
- EP-A2- 0 814 282
- JP-A- 63 009 756
- US-A- 2 331 684
- US-A- 3 788 157
- PATENT ABSTRACTS OF JAPAN vol. 012, no. 206 14 June 1988 & JP 63 009 756 A (HINO MOTORS LTD) 16 January 1988
- PATENT ABSTRACTS OF JAPAN vol. 1996, no. 04 30 April 1996 & JP 03 032 387 A (HINO MOTORS LTD) 22 December 1995

## Description

### Field of the invention

The present invention relates to vehicle transmissions, and more particularly to a device for preventing gear hopout in tooth clutches that are subjected to misalignment due to forces acting on rotating parts they connect.

### Background of the invention

Tooth clutches are frequently used in stepped vehicle transmissions to engage and disengage the gears. A tooth clutch can rotatably connect a main part with a substantially coaxial connectable part. Normally, an engaging sleeve is used as an interconnecting member between these two parts. This engaging sleeve is often rotatably fixed but axially moveable with respect to said main part by means of, for instance, splines. There are clutch teeth at the end of the engaging sleeve that faces the connectable part. These clutch teeth need to be compatible with corresponding clutch teeth on the connectable part. These two sets of clutch teeth can be brought into mesh with each other by moving the engaging sleeve in axial direction towards the connectable part.

In double-acting tooth clutches, there are clutch teeth at both ends of the engaging sleeve. Thereby, the engaging sleeve can connect the main part to either a first or a second connectable part. These connectable parts must have clutch teeth that are compatible with the clutch teeth at the corresponding end of the engaging sleeve.

Some tooth clutches comprising a main part, an engaging sleeve and connectable parts can be seen in EP 63-9756, US-2,070,140, US-3,137,376, DE-4319135A1 and US-6,422,105. In heavy road vehicles, such as heavy trucks, transmissions of range compound type are often used. In such a transmission, a main section, having several selectable gears, is connected in series with a range section. There are two gears in the range section; one low-range gear with a large speed reduction and one high-range gear with no speed reduction, normally referred to as a direct gear. In practice, the range section doubles the number of gears in the main section. A typical state-of-the-art heavy truck transmission of range compound type is shown in Fig.1 in WO-2004069621, featuring a main section 2 and a range section 3.

Range sections are often embodied as a planetary arrangement that is combined with a double-acting tooth clutch. Due to the design of the planetary arrangement, the main part of the tooth clutch may be fixedly connected to the engaging sleeve and move axially with the sleeve. In such cases, the main part usually is the ring gear of the planetary arrangement. A typical example is shown in US-4,667,538, where the engaging sleeve 18 is fixedly connected to the ring gear 14. In some embodiments, the engaging sleeve is integrated in the ring gear, for example as shown in EP-0916872 (Fig. 3, items 56 and 58) and, more advanced, in US-5,083,993 (Fig. 1, item 24).

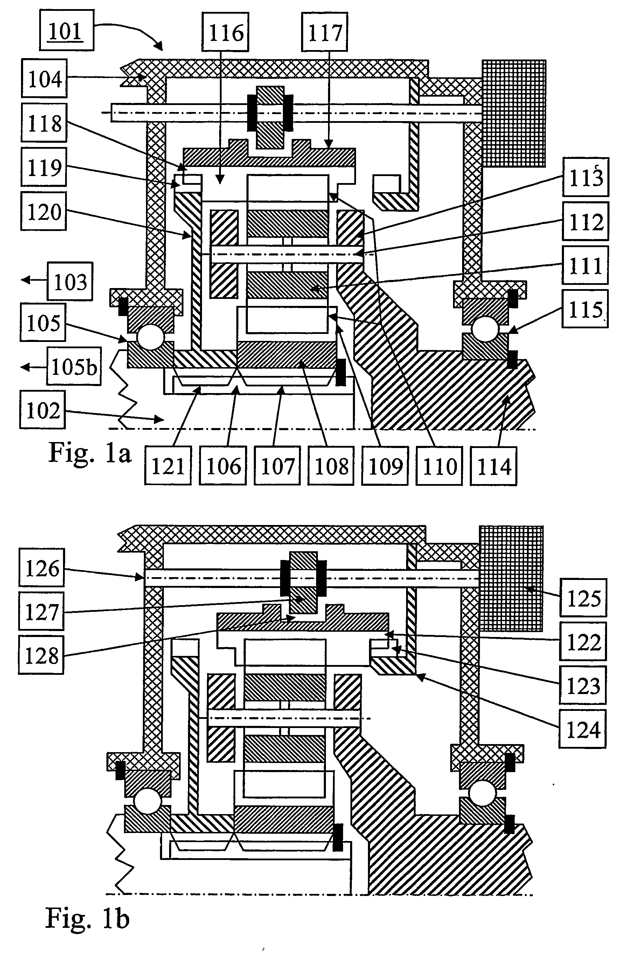

Fig. 1a shows a longitudinal section of a simplified range section 101 of planetary type. The input shaft of the range section 101 is a main shaft 102 of a main section 103. A transmission housing 104 rotatably supports the main shaft 102 by means of a bearing 105 and a bearing 105b in the main section 103. There are external spline teeth 106 at the end of the main shaft 102. The spline teeth 106 are meshing with internal spline teeth 107 of a sun gearwheel 108. External gear teeth 109 of the sun gearwheel 108 are in mesh with external gear teeth 110 of a planet gearwheel 111. A planet axle 112 rotatably supports the planet gearwheel 111 to a planet carrier 113 that is shown integral with an output shaft 114. A number of identical planet gearwheels are located with substantially equal spacing along the periphery of the planet carrier 113. An output bearing 115 rotatably supports the output shaft 114 to the transmission housing 104. The external gear teeth 110 of the planet gearwheel 111 also mesh with internal gear teeth 116 of a ring gearwheel 117. In the position shown in Fig. 1a, internal direct clutch teeth 118 of the ring gearwheel 117 mesh with external clutch teeth 119 of a direct engaging ring 120. Internal spline teeth 121 of the direct engaging ring 120 are in mesh with the external spline teeth 106 of the main shaft 102. Hence, in Fig. 1a the ring gearwheel 117 is rotationally connected to the main shaft 102 by means of the direct engaging ring 120. Thereby, the planet gearwheel 111 cannot move in peripheral direction relative to the main shaft 102. The result is that the main shaft 102, the output shaft 114 and the parts in between will rotate in a unison way, that is, with the same speed. This represents the direct high-range gear. In Fig. 1b, the ring gearwheel 117 has been moved to the right in comparison with Fig. 1a. Thereby, the direct clutch teeth 118 are no longer in mesh with the external clutch teeth 119 of the direct engaging ring 120. Instead, internal reduction clutch teeth 122 of the ring gearwheel 117 have been brought into mesh with external clutch teeth 123 of a stationary engaging ring 124 that is fixedly connected to the transmission housing 104. Thereby, the ring gearwheel 117 will not rotate when in the position of Fig. 1b. The result will be the low-range reduction gear; the output shaft 114 will rotate slower than the main shaft 102.

A range shift actuator 125 accomplishes the axial displacement of the ring gearwheel 117. A range shift rod 126 is being pushed or pulled in appropriate direction by the range shift actuator 125. A range shift fork 127 is fixedly attached to the range shift rod 126. The range shift fork 127 extends into a circumferential groove 128 on the ring gearwheel 117. The range shift actuator 125 may be of one of several types, for instance hydraulic, pneumatic, electromagnetic or electromechanical. Normally, the range shift actuator 125 is only activated during a shift. When a shift has been completed, it will be deactivated.

In the range section of Fig. 1a and Fig. 1b the ring gearwheel can be regarded as a combined main part and engaging sleeve of a double-acting tooth clutch. Furthermore, it can be noted that only one bearing 115 supports the output shaft 114. The planetary range section 101 provides another support. When torque is being transferred by gearwheels and clutch teeth of the planetary range section 101, contact forces in the gear and tooth clutch meshes around the periphery will urge the parts to become substantially coaxial. When the planetary range section 101 is transferring no torque, it will still provide some support for the output shaft 114, albeit with a lower degree of coaxiality between the parts. Thus, the gearwheels along with the tooth clutches of the planetary range section 101 will act as some kind of a second supporting bearing for the output shaft 114. Then, in high range position, as shown in Fig. 1a, the main shaft 102 indirectly supports the output shaft 114.

Tooth clutches are normally designed to be self-retaining in engaged state. This means that once the tooth clutch has been engaged, no external force is required to retain the tooth clutch in this engaged state. Different design solutions are used to achieve this self-retaining feature. One common design solution is to have the clutch teeth angled in order to create a nominal axial force that urges the sleeve to retain its engaged position when torque is being transferred in the tooth clutch. This solution is often referred to as back-taper design. An example is shown in US-5,626,213. There, in Fig. 2 it can be seen that the clutch teeth flanks 21, 26 are angled α, β with respect to the flanks 28 of the spline teeth 11 of the engaging sleeve 8. Thereby, the contact forces will urge the clutch teeth towards fully engaged position when torque is being transferred. Some other design solutions for self-retaining action can be seen in US-2,070,140 and FR-2660723.

In most self-retaining tooth clutch designs at least one of the sets of clutch teeth is made by modifying a set of spline or gear teeth. Returning to US-5,626,213, the angled back-tapered flanks 26 of the engaging sleeve 8 can be regarded as a slight modification of the flanks 28 of the internal spline teeth 11. Similarly, in Fig. 1a and Fig. 1b back-taper on the clutch teeth 118 and 122 can be made by modifying the internal gear teeth 116 of the ring gearwheel 117. A rolling operation is a rapid and very cost-effective method to embody such modifications. In a rolling operation the flanks of the spline or gear teeth of an engaging sleeve or gearwheel are deformed plastically by meshing with the teeth of a mating tool wheel under radial load and rotation. Unfortunately, the material volume that can be plastically deformed in a rolling operation is small. Hence, the back-taper angles (α, β in US-5,626,213) that are feasible to achieve in a rolling operation are small, typically about 5 degrees. This is, however, sufficient for most applications of tooth clutches.

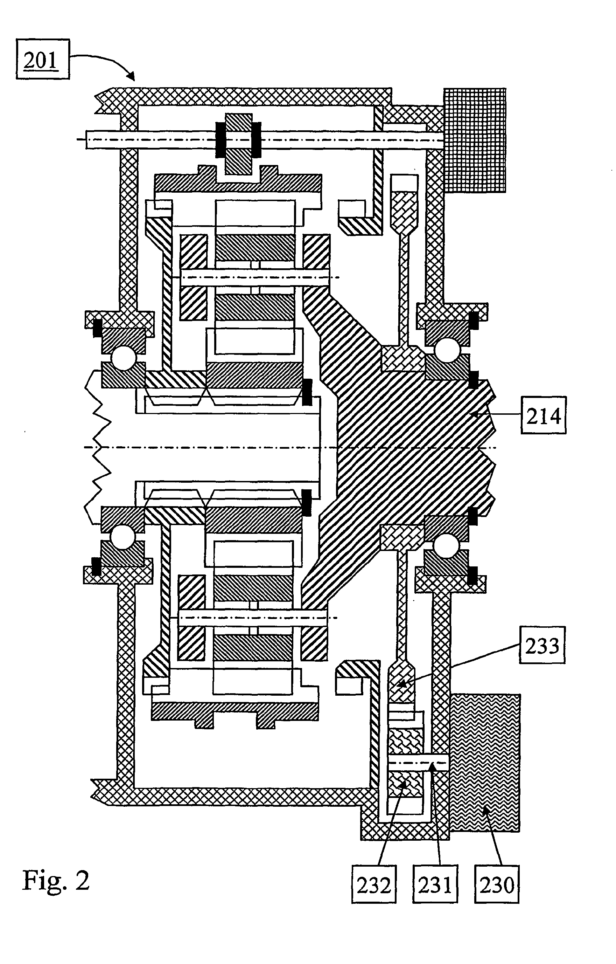

There are some applications where conventionally made back-tapered clutch teeth have been shown to have insufficient self-retaining action. One example is shown in Fig. 2, where, in comparison with Fig. 1a, a retarder unit 230 has been added to the range section 201. The retarder unit 230 is an auxiliary brake that can be used in long down-hill slopes in order to reduce wear and prevent over-heating of the ordinary wheel brakes of the vehicle. The retarder unit is driven by a retarder shaft 231 that is rotatably connected to a retarder driven gearwheel 232. In turn, the retarder driven gearwheel 232 meshes with a retarder driver gearwheel 233 that is rotationally connected to the output shaft 214 of the range section 201.

When the retarder unit 230 is in operation, gear mesh forces will act on the retarder driver gearwheel 233. These forces will tend to misalign the output shaft 214. Normally, engine braking is used simultaneously with retarder operation. Thereby, torque will be transferred by the range section, and there will be contact forces in the gear meshes and between the clutch teeth of the range section. These contact forces will urge the parts of the range section towards a substantially coaxial state, as was described earlier. Hence, the contact forces will counteract the tendency of the gear mesh forces on the retarder driver gearwheel 233 to misalign the output shaft 214.

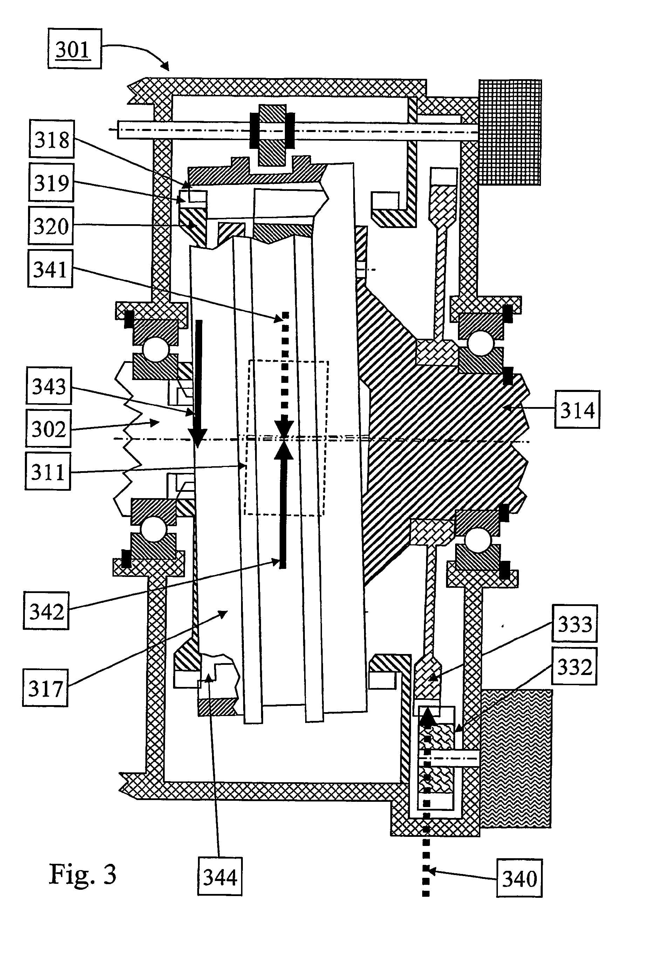

Some retarder operating conditions have shown to cause problems in a planetary range section as in Fig. 2. One example is when there is a relatively large braking action in the retarder unit 230 and a relatively small engine braking action. This is illustrated schematically in Fig. 3. Due to the retarder operation, a retarder gear mesh force 340 is acting on the retarder driver gear 333. This retarder gear mesh force 340 tends to misalign the output shaft 314 in clockwise sense in the view of Fig. 3. However, the retarder gear mesh force 340 is balanced by a planet gear mesh force 341 that acts on a planet gearwheel 311 in the gear mesh with the ring gearwheel 317. The counter force to the planet gear mesh force 341 is the ring gear mesh force 342 that acts on the ring gearwheel 317. In turn, the ring gear mesh force 342 is balanced by a ring clutch mesh force 343 in the mesh between the clutch teeth 318 of the ring gearwheel 317 and the clutch teeth 319 of the direct engaging ring 320.

The ring mesh force 342 and the ring clutch force 343 compose a force couple that tends to misalign the ring gearwheel 317 in counter-clockwise sense as is indicated in Fig. 3. Thereby, an axial gap 344 will result between the clutch teeth 318 of the ring gearwheel 317 and the clutch teeth 319 of the direct engaging ring 320. Hence, during rotation there will be an urge for relative motion in axial direction between the clutch teeth 318 of the ring gearwheel 317 and the clutch teeth 319 of the direct engaging ring 320. This urge for relative motion may turn into an unstable state if the friction between the contacting clutch teeth is large and the self-retaining action from for instance back-taper is insufficient. Then, the clutch teeth 318 of the ring gearwheel 317 will be fed out of engagement with the mating clutch teeth 319 of the direct engaging ring 320. Thereby, no torque can be transferred by the range section 301, and, consequently, no engine braking is possible.

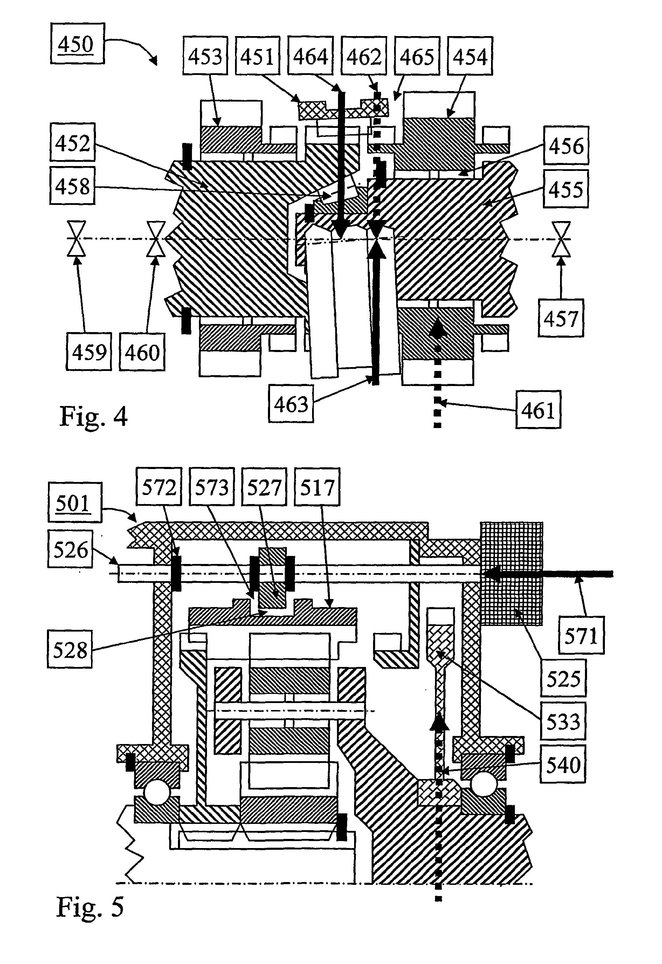

Another example is shown in Fig. 4; a splitter unit 450 of a gearbox. An engaging sleeve 451 can rotationally connect an input shaft 452 to either of a first gearwheel 453 and a second gearwheel 454. Each of gearwheels 453 and 454 is in mesh with a mating gearwheel that is rotationally fixed to a countershaft (not shown). The second gearwheel 454 is rotatably supported on a main shaft 455 by means of bearings 456. The main shaft 455 is supported in one end by a gearbox housing (not shown) by a symbolically shown bearing 457. The other end of the main shaft 455 is supported by the input shaft 452 by a taper roller bearing 458. The input shaft 452, in turn, is supported directly or indirectly by the gearbox housing by two symbolically shown bearings 459 and 460.

In Fig. 4, the engaging sleeve 451 is positioned to rotationally connect the input shaft 452 and the second gearwheel 454. Thereby, torque can be transferred from the input shaft 452 to the second gearwheel 454 and on to the mating gearwheel on the countershaft. Then, gear mesh forces 461 would act on the second gearwheel 454. In operation, there might be an axial gap in the taper roller bearing 458. This axial gap could be the result of for instance thermal expansion and axial force components in gear meshes. In a taper roller bearing, an axial gap always corresponds to a radial gap. In the splitter unit 450 such a radial gap would decrease the radial support and allow a misalignment of the main shaft 455. Then, that misalignment would be counter-acted by contact forces between the clutch teeth of the input shaft 452, engaging sleeve 451 and second gearwheel 454. This is similar to what has been described above for planetary range sections. For the second gearwheel 454, the gear mesh force 461 would then be balanced by a gearwheel contact force 462 acting on the clutch teeth that are engaged with corresponding clutch teeth on the engaging sleeve 451. The counter force to the gearwheel contact force 462 is a sleeve clutch contact force 463 that acts on the clutch teeth of the engaging sleeve 451. For the engaging sleeve 451, the sleeve clutch contact force 463 is balanced by a sleeve spline contact force 464. Similar to Fig. 3, the sleeve clutch contact force 463 and the sleeve spline contact force 464 compose a force couple that urges to misalign the engaging sleeve 451. Then, an axial gap 465 can be created between the engaging sleeve 451 and the second gearwheel 454. During rotation, this might make the engaging ring 451 being fed out of engagement with the clutch teeth of the second gearwheel 454, very similar to the ring gearwheel 317 in Fig. 3.

Some conclusions can be drawn from the analysis of the systems in Fig. 3 and Fig. 4. In both cases there is a supported shaft (314, 455) that is supported radially by a supporting shaft (302, 452). A proper conventional radial support device between those shafts, such as a radial bearing (458), is either missing or insufficient under some conditions. Furthermore, the supported shaft is subjected to external forces (340, 461) that urge to misalign the supported shaft in relation to the supporting shaft. Those external forces can act directly on the supported shaft or via other parts, for instance a gearwheel (333, 454) that is fixed to or supported by the supported shaft. Finally, a tooth clutch with an engaging sleeve (317, 451) can selectably connect the supporting shaft for unison rotation with the supported shaft or a number of gearwheels (311, 454) that are radially supported by the supported shaft. Due to the combination of urge to misalign and inadequate radial support device for the supported shaft, at least a part of the supporting action is accomplished by contact forces (341, 462) in the tooth clutch. These contact forces tend to misalign the engaging sleeve. Under certain conditions this misalignment might lead to gear hopout, that is, unwanted and uncontrolled disengagement of the tooth clutch.

There are some known solutions to prevent gear hopouts of the type described above. In general, radial support devices, such as bearings, have been introduced or improved in order to limit the possible misalignment of the supported shaft. In US-5,839,319 a splitter unit similar to the one in Fig. 4 is shown. However, a headset/fourth gear 74 (corresponding to the second gearwheel 454 in Fig. 4) is not supported by a main shaft (corresponding to 455 in Fig. 4) but by a spindle 62 that is rigidly secured to an input shaft 42 (corresponding to 452 in Fig. 4). Thereby, a gear mesh force acting on the headset/fourth gear 74 will not cause any significant urge to misalign the main shaft. Hence, the tendency for gear hopout has been eliminated. However, the additional spindle will imply increased production cost.

US-5,083,993 presents a planetary gear 1 that is similar to the planetary range section 101 in Fig. 1a. In order to reduce possible misalignment, a roller bearing has been included between a planet wheel carrier 9 (corresponding to the planet carrier 113 in Fig. 1a) that is integral with an output shaft 3 (corresponding to 114 in Fig. 1a) and a sun wheel 5 (corresponding to the sun gearwheel 108 in Fig. 1a) that is arranged in a rotationally fixed manner on an input shaft 2 (corresponding to the main shaft 102 in Fig. 1a). Thus, the roller bearing acts as a radial support device for a supported shaft, the output shaft 3, on a supporting shaft, the input shaft 2. However, the roller bearing will imply increased cost.

EP-239555B1 discloses a similar planetary gear 2. Therein, with the aid of a ball bearing 18 a clutch ring 16 supports a planet wheel keeper 10 that is fastened to a planet wheel carrier 11 which, in turn, is integrated with an output shaft 4. The clutch ring 16 is non-rotatably mounted on a sun wheel 7 that is non-rotatably mounted on an input shaft 3. In Fig. 1a the equivalence would be an additional ball bearing between the engaging ring 120 and the part of the planet carrier 113 that is to the left of the planet gearwheel 111. The additional ball bearing 18 will provide a radial support of the output shaft 4 and thereby reducing the possible misalignment. However, the ball bearing 18 will imply increased cost.

US2331684 discloses a further example of a planetary gear as defined in the preamble of claim 1.

JP7332387 discloses a gear disengagement prevention arrangement for a transmission where an electric rotation position sensor 12 is arranged to sense movement of a gear sleeve 18 towards a disengaged position. If the sensor 12 senses movement above a predetermined distance a shift actuator is activated to urge the sleeve back towards the engaged position.

### Brief description of the drawings

Fig. 1a shows a planetary range section of prior art in a direct high-range gear.
Fig. 1b shows the planetary range section of Fig. 1a in a low-range reduction gear.
Fig. 2 shows a planetary range section of prior art with a retarder unit.
Fig. 3 shows forces and misalignments that may occur and may lead to gear hopout in the planetary range section of Fig. 2.
Fig. 4 shows a splitter unit in a gearbox of prior art.
Fig. 5 shows a device to prevent gear hopout according to the invention.

### Summary of the invention

The potential gear hopouts that have been described above can be counteracted by having the shift actuator activated between shifts. Thereby, axial motion of the engaging sleeve or ring gearwheel can be limited, and gear hopouts can be prevented. This is illustrated in Fig. 5 for a planetary range section 501 similar to the ones in Fig. 2 and Fig. 3. The range shift actuator 525 is activated, and a force 571 is applied on the range shift rod 526. In case of an urge for axial motion out of engagement of the ring gearwheel 517, such an axial motion will be prevented by the force 571. Hence, a gear hopout is prevented. A similar solution could also be applied on the splitter unit 450 in Fig. 4.

According to the invention, the range shift actuator 525 in Fig. 5 is only activated between shifts when the retarder is in operation, that is, when there is a gear mesh force 540 acting on the retarder driver gearwheel 533. Thereby, unnecessary activation of the range shift actuator 525 is avoided. For the splitter unit 450 in Fig. 4 the corresponding shift actuator would only have to be activated when there would be a non-zero gear mesh force 461.

A further preferred embodiment has an axial stop device 572 in the subsystem of range shift actuator 525 and range shift rod 526 in Fig. 5. The axial stop device 572 limits the axial motion of the range shift rod 526 to a position that gives a small axial gap 573 between the range shift fork 527 and the groove 528 of the ring gearwheel 517. Thus, under fully engaged conditions there will be no sliding contact between the groove 528 and the range shift fork 527. The result will be less wear and less friction losses. Still, the axial gap 573 is small enough to prevent a gear hopout if the ring gearwheel 517 due to misalignment would start to move axially towards disengaged state. A similar solution could also be used for the splitter unit 450 in Fig. 4.

## Claims

1. Device for preventing gear hopout in a tooth clutch in a vehicle transmission, said tooth clutch comprising an engaging sleeve (117, 451, 517) having clutch teeth (118, 318) that can selectably be brought in and out of an engaged state with mating clutch teeth (119, 319) by means of axial displacement of said engaging sleeve, said axial displacement carried out by a shift actuator system (125-126-127, 525-526-527) comprising at least a shift actuator (125, 525), said tooth clutch causing in said engaged state a first rotating system (102, 302, 452) to rotate in unison with a second rotating system (114, 214, 314, 455, 111, 311, 454),
**characterized in that** said shift actuator system is activated at some cases when said tooth clutch is in said engaged state in order to prevent gear hopout, and where said shift actuator system is only activated between gear shifts when an auxiliary brake system (230) of the vehicle is in operation.

2. A device as in the preceding claim, **characterized in that** said vehicle transmission comprises a supporting shaft (102, 302, 452) that is rotatably supported directly or indirectly by a transmission housing system (104) in two bearing arrangements (105, 105b, 459, 460) and a supported shaft (114, 214, 314, 455) that is being rotatably supported by said transmission housing system in a first support system by a bearing arrangement (115, 457); said supported shaft being substantially coaxial with said supporting shaft.

3. A device as in the preceding claim, **characterized in that** said first rotating system comprises at least one of said supporting shaft and a gearwheel (108) that is arranged on said supporting shaft, and said second rotating system comprises at least one of said supported shaft and a gearwheel (111, 311, 233, 333, 533, 454) that is arranged on said supported shaft.

4. A device as in any of the two preceding claims, **characterized in that** said supported shaft under a set of operating conditions is supported radially by said supporting shaft in a second support system (108-111-117-118-119, 311-317-318-319, 451-454-456, 458) that is located axially apart from said first support system.

5. A device as in claim 4, **characterized in that** a substantial part of the radial support in said second support system is provided by contact forces (341, 342, 343, 462, 463, 464) acting between teeth in said tooth clutch.

6. A device as in any of the two preceding claims, **characterized in that** said set of operating conditions comprises cases when said supported shaft is being urged by external loads (340, 540, 461) towards misaligned state in relation to said supporting shaft, said external loads acting on said supported shaft or on a part (233, 333, 454) arranged on said supported shaft.

7. A device as in any of the preceding claims, **characterized in that** said tooth clutch is part of a compound section of range type (101, 201, 301, 501) and/or splitter type (450) in said vehicle transmission.

8. A device as in any of the preceding claims, **characterized in that** said shift actuator system comprises at least one shift fork (127, 527) that is being subjected to an urge for an axial displacement when said shift actuator is activated, and that said engaging sleeve has a limited axial motion relative to said at least one shift fork.

9. A device as in the preceding claim, **characterized in that** said axial displacement of said at least one shift fork is limited relative to said transmission housing system by a mechanical axial stop device (572) that defines an extreme axial position for said at least one shift fork.

10. A device as in the preceding claim, **characterized in that** said engaged state includes a fully engaged state where no more axial displacement of said engaging sleeve relative to said mating clutch teeth is possible and **in that** there is an axial gap (573) between said shift fork and said engaging sleeve when said shift fork is at said extreme axial position and said tooth clutch is in said fully engaged state.

11. A device as in the preceding claim, **characterized in that** said axial gap is less than said limited axial motion.

## Patentansprüche

1. Vorrichtung zur Verhinderung des Herausspringens eines Gangs in einer Zahnkupplung in einem Fahrzeuggetriebe, wobei die Zahnkupplung eine Einrückmuffe (117, 451, 517) mit Kupplungszähnen (118, 318) umfasst, die wahlweise in und aus einem Eingriffszustand mit Gegenkupplungszähnen (119, 319) mittels einer axialen Verschiebung der Eingriffsmuffe gebracht werden können, wobei die axiale Verschiebung durch ein Schaltstellgliedsystem (125-126-127, 525-526-527) durchgeführt wird, das wenigstens ein Schaltstellglied (125, 525) umfasst, wobei die Zahnkupplung in eingerücktem Zustand eine Drehung eines ersten Drehsystems (102, 302, 452) in Übereinstimmung mit einem zweiten Drehsystem (114, 214, 314, 455, 111, 311, 454) verursacht,
**dadurch gekennzeichnet, dass** das Schaltstellgliedsystem in einigen Fällen aktiviert wird, wenn die Zahnkupplung sich in eingerücktem Zustand befindet, um ein Herausspringen eines Gangs zu verhindern, und dass das Schaltstellgliedsystem nur zwischen Gangwechseln aktiviert wird, wenn ein Hilfsbremssystem (230) des Fahrzeugs in Betrieb ist.

2. Vorrichtung nach dem vorhergehenden Anspruch, **dadurch gekennzeichnet, dass** das Fahrzeuggetriebe eine lagernde Welle (102, 302, 452), die durch ein Getriebegehäusesystem (104) in zwei Lageranordnungen (105, 105b, 459, 460) direkt oder indirekt drehbar gelagert ist, und eine gelagerte Welle (114, 214, 314, 455) umfasst, die drehbar durch das Getriebegehäusesystem in einem ersten Lagersystem durch eine Lageranordnung (115, 457) drehbar gelagert ist, wobei die gelagerte Welle im Wesentlichen koaxial zur lagernden Welle ist.

3. Vorrichtung nach dem vorhergehenden Anspruch, **dadurch gekennzeichnet, dass** das erste Drehsystem die lagernde Welle und/oder ein Zahnrad (108) umfasst, das auf der lagernden Welle angeordnet ist, und dass das zweite Drehsystem die gelagerte Welle und/oder ein Zahnrad (111, 311, 233, 333, 533, 454) umfasst, das auf der gelagerten Welle angeordnet ist.

4. Vorrichtung nach einem der zwei vorhergehenden Ansprüche, **dadurch gekennzeichnet, dass** die gelagerte Welle bei einem Satz von Betriebszuständen durch die lagernde Welle in einem zweiten Lagersystem (108-111-117-118-119, 311-317-318-319, 451-454-456, 458) radial abgestützt ist, das in axialem Abstand von dem ersten Lagersystem angeordnet ist.

5. Vorrichtung nach Anspruch 4, **dadurch gekennzeichnet, dass** ein wesentlicher Teil der radialen Abstützung in dem zweiten Lagersystem durch Kontaktkräfte (341, 342, 343, 462. 463. 464) bereitgestellt wird, die zwischen den Zähnen in der Zahnkupplung wirken.

6. Vorrichtung nach einem der zwei vorhergehenden Ansprüche, **dadurch gekennzeichnet, dass** der Satz von Betriebsbedingungen Fälle umfasst, in denen die gelagerte Welle durch externe Belastungen (340, 540, 461) in Richtung eines bezüglich der lagernden Welle fehl ausgerichteten Zustands gedrängt wird, wobei die äußeren Lasten auf die gelagerte Welle oder ein Teil (233, 333, 454) wirken, das auf der gelagerten Welle angeordnet ist.

7. Vorrichtung nach irgendeinem der vorhergehenden Ansprüche, **dadurch gekennzeichnet, dass** die Zahnkupplung ein Teil eines Verbundabschnitts eines Verteilertyps (101, 201, 301, 501) und/oder eines Splittyps (450) in dem Fahrzeuggetriebe ist.

8. Vorrichtung nach irgendeinem der vorhergehenden Ansprüche, **dadurch gekennzeichnet, dass** das Schaltstellgliedsystem wenigstens eine Schaltgabel (127, 527) umfasst, die einem Drang für eine axiale Verschiebung ausgesetzt ist, wenn das Schaltstellglied aktiviert wird, und dass die Einrückmuffe eine begrenzte axiale Bewegung bezüglich der wenigstens einen Schaltgabel hat.

9. Vorrichtung nach dem vorhergehenden Anspruch, **dadurch gekennzeichnet, dass** die axiale Verschiebung der wenigstens einen Schaltgabel bezüglich des Getriebegehäusesystems durch eine mechanische Axialanschlagvorrichtung (572) begrenzt ist, die eine extreme Axialposition für die wenigstens eine Schaltgabel definiert.

10. Vorrichtung nach dem vorhergehenden Anspruch, **dadurch gekennzeichnet, dass** der eingerückte Zustand einen vollständig eingerückten Zustand umfasst, in dem keine axiale Verschiebung der Eingriffsmuffe bezüglich der Gegenkupplungszähne mehr möglich ist, und dass zwischen der Schaltgabel und der Einrückmuffe ein axialer Spalt (573) vorhanden ist, wenn die Schaltgabel sich in der extremen Axialposition befindet und sich die Zahnkupplung in dem vollständig eingerückten Zustand befindet.

11. Vorrichtung nach dem vorhergehenden Anspruch, **dadurch gekennzeichnet, dass** der axiale Spalt geringer ist als die begrenzte Axialbewegung.

## Revendications

1. Dispositif permettant de prévenir des changements intempestifs de vitesse d'un embrayage à dents d'une transmission de véhicule, l'embrayage à dents comportant un manchon d'embrayage (117, 451, 517) ayant une denture d'embrayage (118, 318) pouvant être mise de manière sélective dans un état embrayé ou débrayé par rapport à une denture d'embrayage complémentaire (119, 319) par l'intermédiaire d'un déplacement axial du manchon d'embrayage, le déplacement axial effectué par un système d'actionneur de changement de vitesse (125-126-127, 525-526-527) comprenant au moins un actionneur de changement (125, 525), l'embrayage à dents amenant dans l'état embrayé un premier système rotatif (102, 302, 452) à tourner à l'unisson avec un second système rotatif (114, 214, 314, 455, 111, 311, 454),
**caractérisé en ce que** le système d'actionneur de changement est activé dans certains cas lorsque l'embrayage à dents est dans l'état embrayé afin d'empêcher un changement de vitesse intempestif, et où le système d'actionneur de changement est seulement activé entre des changements de vitesse lorsqu'un système de frein auxiliaire (230) du véhicule est en action.

2. Dispositif selon la revendication précédente, **caractérisé en ce que** la transmission du véhicule comprend un arbre de support (102, 302, 452) qui est supporté de manière rotative directement ou indirectement par un système de boîtier de transmission (104) dans deux agencements de palier (105, 105b, 459, 460) et un arbre supporté (114, 214, 314, 455) qui est supporté de manière rotative par le système de boîtier de transmission dans un premier système de support par un agencement de palier (115, 457); l'arbre supporté étant sensiblement coaxial à l'arbre de support.

3. Dispositif selon la revendication précédente, **caractérisé en ce que** le premier système rotatif comprend au moins un arbre de support et une roue dentée (108) qui est agencée sur l'arbre de support, et le second système rotatif comprend au moins un parmi l'arbre supporté et une roue dentée (111, 311, 233, 333, 533, 454) qui est agencée sur l'arbre supporté.

4. Dispositif selon l'une quelconque des deux revendications précédentes, **caractérisé en ce que** l'arbre supporté sous un ensemble de conditions de fonctionnement est supporté radialement par l'arbre de support d'un second système de support (108-111-117-118-119, 311-317-318-319, 451-454-456, 458) qui est positionné axialement écarté du premier système de support.

5. Dispositif selon la revendication 4, **caractérisé en ce qu'**une partie importante du support radial du second système de support est fournie par des forces de contact (341, 342, 343, 462, 463, 464) agissant entre des dents de l'embrayage à dents.

6. Dispositif selon l'une quelconque des deux revendications précédentes, **caractérisé en ce que** l'ensemble de conditions de fonctionnement comprend des cas où l'arbre supporté est poussé par des charges externes (340, 540, 461) en direction d'un état mal aligné par rapport à l'arbre de support, les charges externes agissant sur l'arbre supporté ou sur une partie (233, 333, 454) agencée sur l'arbre supporté.

7. Dispositif selon l'une quelconque des revendications précédentes, **caractérisé en ce que** l'embrayage à dents est une partie d'un tronçon composé du type à gammes (101, 201, 301, 501) et/ou du type diviseur (450) dans la transmission du véhicule.

8. Dispositif selon l'une quelconque des revendications précédentes, **caractérisé en ce que** le système d'actionneur de changement comprend au moins une fourchette de changement (127, 527) qui est soumise à une poussée pour un déplacement axial lorsque l'actionneur de changement est activé, et **en ce que** le manchon de mise en prise a un mouvement axial limité par rapport à la au moins une fourchette de changement.

9. Dispositif selon la revendication précédente, **caractérisé en ce que** le déplacement axial de la au moins une fourchette de changement est limité par rapport au système de boîtier de transmission par un dispositif de butée mécanique axiale (572) qui définit une position axiale extrême pour la au moins une fourchette de changement.

10. Dispositif selon la revendication précédente, **caractérisé en ce que** l'état embrayé comprend un état entièrement embrayé où aucun déplacement axial supplémentaire du manchon de mise en prise par rapport aux dents d'embrayage complémentaires n'est possible et **en ce qu'**il existe un espace axial (573) entre la fourchette de changement et le manchon de mise en prise lorsque la fourchette de changement est au niveau de la position axiale extrême et l'embrayage à dents est dans l'état entièrement embrayé.

11. Dispositif selon la revendication précédente, **caractérisé en ce que** l'espace axial est plus petit que le mouvement axial limité.
